# EUROPÄISCHE PATENTSCHRIFT

(11) **EP 0 632 208 B1**
(45) Veröffentlichungstag und Bekanntmachung des Hinweises auf die Patenterteilung: **08.09.1999**
(21) Anmeldenummer: 94201616.3
(22) Anmeldetag: 07.06.1994
(51) Int. Cl.: F16C 33/20

(54) **Mehrschicht-Gleitlagerwerkstoff**
Compound slide bearing material
Matériau composite pour palier au glissement

(30) Priorität: 16.06.1993 DE 4319867
(43) Veröffentlichungstag der Anmeldung: 04.01.1995
(73) Patentinhaber: KS Gleitlager GmbH, 68789 St. Leon-Rot (DE)
(72) Erfinder: Baureis, Hans-Paul, D-69234 Horrenberg (DE); Schubert, Werner, D-69168 Wiesloch (DE); Müller, Manfred, D-74257 Untereisesheim (DE)
(74) Vertreter: Dreiss, Fuhlendorf, Steimle & Becker

(56) Entgegenhaltungen:
- EP-A- 0 044 577
- EP-A- 0 430 324
- DE-A- 3 343 697

## Beschreibung

Die Erfindung betrifft einen Mehrschicht-Gleitlagerwerkstoff, aufgebaut aus einer metallischen Stützschicht, einer darauf porös aufgesinterten Trägerschicht aus metallischem Gleitlagerwerkstoff und einer Gleitschicht aus einer auch die Poren der Trägerschicht vollständig ausfüllenden Mischung, die Polytetrafluorethylen (PTFE) und 5 bis 30 Vol.% metallischem Füllstoff enthält.

Gleitlager aus Massivkunststoffen besitzen eine sehr geringe Affinität gegenüber der Gegenlauffläche, sind deshalb unempfindlich gegen Fressen und stellen gegenüber metallischen Gleitlagern wesentlich geringere Ansprüche an die Schmierstoffversorgung. Andererseits sind derartige Gleitlager nur begrenzt einsetzbar, weil sie unter Belastung zum Kaltfluß neigen, eine hohe thermische Ausdehnung, eine geringe Wärmeleitung besitzen und der Verschleißwiderstand vergleichsweise gering ist.

Diese Nachteile lassen sich durch Gleitlager vermeiden, die aus einer Stützschicht aus Stahl, hochfester Aluminiumlegierung oder Bronze, einer auf der Stützschicht porös aufgesinterten Trägerschicht aus Bronze (Zinnbronze oder Zinnbleibronze) oder Aluminiumlagerlegierung und einer Gleitschicht aus einem Gemisch von PTFE und 5 bis 30 Vol.% Blei oder Zinksulfid, mit dem auch das Porenvolumen der Trägerschicht vollständig ausgefüllt ist, aufgebaut sind (Technisches Handbuch der Kolbenschmidt AG, Heft 16, 1989). Die Gleitschicht überträgt sich während der ersten Betriebsstunden teilweise auf die Gegenlauffläche. Es bildet sich eine Gleitfläche mit niedrigem Reibungskoeffizienten und geringem Verschleiß. Die Trägerschicht ist ein stabiles tragfähiges Gerüst und gewährleistet eine gute Wärmeableitung. Die in den Poren der Trägerschicht eingelagerte PTFE-Blei- bzw. -Zinksulfid-Mischung tritt bei Erwärmung infolge Reibung aus und wirkt so als Schmierstoff. Die Stützschicht und die Trägerschicht verleihen dem Gleitlager eine hohe Druckfestigkeit von ca. 320 N/mm². Diese Gleitlager sind für wartungsfreien Betrieb ohne zusätzliche Schmierstoffe konzipiert, sind weitgehend unempfindlich gegen eindringende Fremdkörper und können bei Umgebungstemperaturen von -200°C bis +280°C eingesetzt werden. Bei einer maximal zulässigen spezifischen Lagerbelastung von p = 250 bis 140 N/mm² und einer niedrigen Gleitgeschwindigkeit von bis zu v = 0,001 m/s wird ein ausgesprochen günstiger Reibungskoeffizient von 0,03 µ erzielt. Der Reibungskoeffizient steigt auf höchstens 0,15 bis 0,25 µ an, wenn die spezifische Lagerbelastung p < 1 N/mm² und die höchstzulässige Gleitgeschwindigkeit v = 0,5 bis 2 m/s betragen. Außer durch den oberen Grenzwert der spezifischen Lagerbelastung von p = 250 N/mm² wird der Verschleiß und damit die Lebensdauer des Gleitlagers durch das Produkt aus spezifischer Lagerbelastung p und Gleitgeschwindigkeit v der Gegenlauffläche bestimmt. Für den Dauerbetrieb des Gleitlagers ist ein pv-Faktor von 1,8 N/mm²·m/s und von 3,6 N/mm²·m/s kurzzeitig zulässig. Das Gleitlager ist in den meisten Bereichen der Technik universell anwendbar.

Eine Vielzahl von Gleitschichtmischungen für Mehrschicht-Gleitlagerwerkstoffe ist in der DE-A-33 43 697 erwähnt. Sie weisen jedoch schlechtere Verschleißeigenschaften als der eingangs erwähnte bekannte Mehrschicht-Gleitlagerwerkstoff auf.

Es ist die Aufgabe der vorliegenden Erfindung, bei dem eingangs beschriebenen Mehrschicht-Gleitlagerwerkstoff die dem pv-Faktor proportionale Verschleißtiefe zu senken, ohne den günstigen Reibungskoeffizienten zu beeinträchtigen.

Diese Aufgabe wird durch einen Mehrschicht-Gleitlagerwerkstoff nach Anspruch 1 gelöst.

Durch diese Maßnahme gelingt es, die zulässige Gleitgeschwindigkeit auf v = 2,5 bis 3 m/s zu erhöhen und dadurch die Verschleißtiefe von bis zu 40 µm auch nach einer Laufzeit von 600 Stunden des Gleitlagers auf Werte von deutlich unter 15 µm zu senken.

Im Rahmen der weiteren Ausgestaltung der Erfindung kann die Dicke der Gleitschicht über den Spitzen der Trägerschicht auf > 30 µm bis zu 80 µm erhöht und damit eine vorteilhafte spanende Bearbeitung der Lagerbohrung von aus dem erfindungsgemäßen Mehrschicht-Gleitlagerwerkstoff hergestellten gerollten Buchsen ermöglicht werden.

Für den Fall, daß der Mehrschicht-Gleitlagerwerkstoff für Gleitlager eingesetzt wird, die relativ höheren Gleitgeschwindigkeiten und relativ niedrigeren spezifischen Lagerbelastungen ausgesetzt sind, ist es angebracht, in der Gleitfläche der Gleitschicht Schmiertaschen für das Einbringen einer Initialschmierung vorzusehen.

Im folgenden werden fünf aus dem erfindungsgemäß aufgebauten Mehrschicht-Gleitlagerwerkstoff vergleichend zu fünf aus dem zum Stand der Technik gehörenden Mehrschicht-Gleitlagerwerkstoff hergestellte gerollten Buchsen jeweils mit den Abmessungen Ø 20 x Ø 23 x 20 mm getestet. Die gerollten Buchsen bestehen aus einer 1,1 mm dicken Stahlstützschicht und einer darauf porös aufgesinterten 0,3 mm dicken Bleizinnbronzeschicht, deren Porenvolumen mit einer Mischung aus 70 Vol.% Polytetrafluorethylen (PTFE), 10 Vol.% Polyvinylidenfluorid (PVDF) und 20 Vol.% Blei vollständig ausgefüllt ist. Die gleiche Mischung befindet sich als 30 µm dicke Gleitschicht über den Spitzen der Bleizinnbronzeschicht. Von diesem Aufbau unterscheiden sich die aus dem bekannten Mehrschicht-Gleitlagerwerkstoff gefertigten gerollten Buchsen nur dadurch, daß die Füllung der Poren der Zinnbronzeschicht und die Gleitschicht aus 80 Vol.% PTFE und 20 Vol.% Blei bestehen.

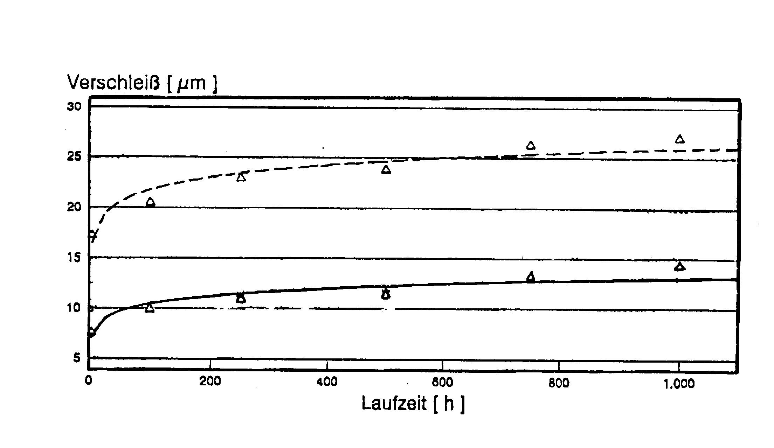

Die gerollten Buchsen werden auf einem Rotationsprüfstand einer Verschleißuntersuchung bei einer spezifischen Lagerbelastung von p = 0,6 N/mm² und einer Gleitgeschwindigkeit der Welle von v = 2,3 m/s - entsprechend einem pv-Faktor von 1,38 N/mm²·m/s - unterworfen. Die in der Zeichnung dargestellten Kurven für das Verschleißverhalten der gerollten Buchsen in Abhängigkeit von der Laufzeit, die jeweils einen Mittelwert aus den Verschleißuntersuchungen an den jeweiligen fünf Buchsen wiedergeben, zeigen, daß sowohl während der Einlaufzeit bis etwa 600 Betriebsstunden als auch nach beendeter Laufzeit die aus dem erfindungsgemäß aufgebauten Mehrschicht-Gleitlagerwerkstoff (ausgezogene Kurvenlinie) produzierten gerollten Buchsen einen um ca. 50 % geringeren Verschleiß als die aus dem zum Stand der Technik gehörenden Mehrschicht-Gleitlagerwerkstoff (gestrichelte Kurvenlinie) hergestellten gerollten Buchsen aufweisen.

## Patentansprüche

1. Mehrschicht-Gleitlagerwerkstoff, aufgebaut aus einer metallischen Stützschicht, einer darauf porös aufgesinterten Trägerschicht aus metallischem Gleitlagerwerkstoff und einer Gleitschicht, die aus einer auch die Poren der Trägerschicht vollständig ausfüllenden Mischung aus Polytetrafluorethylen (PTFE), 5 - 30 Vol.% metallischem Füllstoff und 5 - 40 vol.% Polyvinylidenfluorid (PVDF) besteht.

2. Mehrschicht-Gleitlagerwerkstoff nach Anspruch 1, dadurch gekennzeichnet, dass die Dicke der Gleitschicht > 30 µm bis zu 80 µm beträgt.

3. Mehrschicht-Gleitlagerwerkstoff nach den Ansprüchen 1 und 2, dadurch gekennzeichnet, dass die Gleitfläche der Gleitschicht Schmiertaschen aufweist.

## Claims

1. Multilayer sliding-bearing material, composed of a metallic support layer, a carrier layer porously sintered onto the support layer and made of a metallic sliding-bearing material, and a sliding layer consisting of a mixture, which also completely fills the pores of the carrier layer, of polytetrafluoroethylene (PTFE), 5 - 30% by volume of metallic filler and 5 - 40% by volume of polyvinylidene fluoride (PVDF).

2. Multilayer sliding-bearing material according to Claim 1, characterized in that the sliding layer has a thickness of from > 30 µm up to 80 µm.

3. Multilayer sliding-bearing material according to Claims 1 and 2, characterized in that the sliding surface of the sliding layer has lubricating recesses.

## Revendications

1. Matériau composite pour palier lisse, composé d'une couche support métallique, d'une couche d'appui poreuse agglomérée par frittage sur ladite couche support et consistant en un matériau métallique pour palier lisse, et d'une couche de glissement constituée d'un mélange de polytétrafluoréthylène (PTFE), de 5 à 30% en volume de charges métalliques et de 5 à 40% en volume de fluorure de polyvinylidène (PVDF), ledit mélange remplissant également complètement les pores de la couche d'appui.

2. Matériau composite pour palier lisse selon la revendication 1, caractérisé en ce que l'épaisseur de la couche de glissement est supérieure à 30 µm et inférieure ou égale à 80 µm.

3. Matériau composite pour palier lisse selon les revendications 1 et 2, caractérisé en ce que la surface de glissement de la couche de glissement présente des cavités de lubrification.
